# EUROPÄISCHE PATENTSCHRIFT

(11) **EP 0 996 509 B1**
(45) Veröffentlichungstag und Bekanntmachung des Hinweises auf die Patenterteilung: **02.04.2003**
(21) Anmeldenummer: 98937492.1
(22) Anmeldetag: 17.06.1998
(51) Int. Cl.: B05D 7/02, B05D 3/08, B05D 3/14

(54) **VERFAHREN ZUR BESCHICHTUNG VON SILICONELASTOMEREN**
METHOD FOR COATING SILICONE ELASTOMERS
PROCEDE DE REVETEMENT D'ELASTOMERES DE SILICONE

(30) Priorität: 30.06.1997 DE 19727525
(43) Veröffentlichungstag der Anmeldung: 03.05.2000
(73) Patentinhaber: GE Bayer Silicones GmbH & Co. KG, 40699 Erkrath (DE)
(72) Erfinder: NAUMANN, Thomas, D-51371 Leverkusen (DE); WROBEL, Dieter, D-51375 Leverkusen (DE)
(86) Internationale Anmeldenummer: EP9803650
(87) Internationale Veröffentlichungsnummer: WO99001233

(56) Entgegenhaltungen:
- EP-A- 0 575 798
- WO-A-95/20006
- CH-A- 653 109
- GB-A- 1 014 687
- GB-A- 2 045 824
- GB-A- 2 107 923
- US-A- 3 460 975
- US-A- 5 024 863
- US-A- 5 338 574
- US-A- 5 677 007

## Beschreibung

Die Erfindung betrifft ein Verfahren zur Beschichtung von Siliconelastomeren, insbesondere von kleinen Flächen (< 100 mm²) aus Siliconelastomeren. Das erfindungsgemäße Verfahren ermöglicht dabei vor allem die Beschichtung in Dicken <300 µm.

Die Beschichtungsmassen können pigmentiert z.B. mit Ruß elektrisch leitend sein, z.B. zur Erzielung von elektrisch leitenden Kontaktpunkten auf Silicon-Schaltmatten für Telefontastaturen. Die Beschichtungsmassen können auch transparent oder transluzent sein, z.B. Beschichtungen auf bedruckten Tastaturen (Topcoat) zum Schutz der Bedruckung gegen Abrieb, Handschweiß und sonstiger aggressiver Substanzen, z.B. Alkohol, Reinigungsmittel, Kosmetika.

Die Beschichtung von Siliconelastomeren gewinnt zunehmend an Bedeutung. Wichtig ist dabei u.a. das Aufbringen elektrisch leitfähiger Kontaktpunkte auf Siliconelastomeren zur Herstellung von Schaltmatten.

Bisher gibt es vollautomatische und manuelle Herstellungsverfahren der Kontaktpunkte.

Vollautomatische Verfahren verlaufen entweder über das Ausstanzen von Kontaktpunkten aus ca. 0,5 mm dicken elektrisch leitfähigen peroxidisch vernetztem Siliconkautschuk mit anschließendem vollautomatischen Plazieren der Kontaktpunkte in einer beheizten Form, anschließendem Überspritzen mit nicht leitfähigem Siliconkautschuk oder dem Spritzgießen der Kontaktpunkte mit anschließendem Überspritzen von nichtleitendem Siliconkautschuk in einer Spritzgießanlage mit zwei Einspritzeinheiten und einer Drehtellerform.

Beide Verfahren haben den Nachteil hoher Investitionskosten für Maschinen und Formen. Außerdem ist dieses Verfahren sehr unflexibel bei Designänderungen z.B.der Schaltmatte.

Weiterhin existieren manuelle Verfahren. In diesen werden gestanzte elektrische Kontaktpunkte per Hand in eine beheizte Form gelegt und anschließend mit nichtleitfähigem Siliconkautschuk im Compression Moulding Verfahren überspritzt. Dieses Verfahren ist sehr arbeitsintensiv.

Die Herstellung einer Schaltmatte aus Siliconkautschuk im Compression-Moulding-Verfahren ohne leitfähigen Kontaktpunkt mit anschließender Bedruckung einer elektrisch leitenden Siliconschicht erfolgt mittels Sieb- oder Tampondruck. Hierbei werden nur Schichtdicken zwischen 1 und 10 µ erzielt, was für einen üblichen elektrischen Kontaktwiderstand von < 100 Ohm nicht ausreicht. Aus diesem Grunde ist es notwendig, mehrere Druckvorgänge mit mehreren Einbrennvorgängen durchzuführen.

Zwar können diese manuellen Verfahren bei Designwechsel der Schaltmatte relativ einfach umgestellt werden, nachteilig ist jedoch die hohe Arbeitsintensität, verbunden mit Qualitätssicherungsproblemen.

Mit Symbolen, Zahlen und Schriftzeichen bedruckte Siliconschaltmatten müssen zudem durch einen Topcoat vor allem gegen Abrieb geschützt werden. Dies geschieht durch Versprühen von geeigneten Klarlacken auf Basis Siliconkautschuk oder organischer Lacksysteme.

Nachteil ist, daß in Folge des Vorbeispritzens der Beschichtungsmasse am Substrat ein Overspray entsteht, der eine sichere Automatisierbarkeit verhindert und manuell oder mit hohem Aufwand automatisiert von den Substratträgern entfernt werden muß. Außerdem entsteht ein Entsorgungsproblem. Auch kann in Folge äußerer Einflüsse (Luftfeuchtigkeit etc.) das Beschichtungsergebnis schwanken (schlechte Optik und Schichtdickenverteilung).

Aufgabe der Erfindung war daher die Bereitstellung eines einfachen Verfahrens zur Beschichtung von Siliconelastomeren, das die Nachteile des Standes der Technik nicht aufweist.

Es wurde nun gefunden, daß eine Beschichtung von Siliconelastomeren dadurch vorgenommen werden kann, daß das Beschichtungsmittel in Form von Tropfen oder als Flüssigkeitsstrahl mit einer Dosierpumpe appliziert und anschließend ausgehärtet wird.

Das erfindungsgemäße Verfahren ist in den vollautomatischen Prozeß zur Herstellung von Schaltmatten integrierbar, benötigt nur geringe Investitionskosten, es ist nur ein einmaliges Härten des Siliconkautschuks oder des organischen Lackes notwendig, das Verfahren ermöglicht eine hohe Flexibilität beim Designwechsel der Schaltmatte, die Mengen an Beschichtungsmaterial sind sehr gering, da kein Verlust durch Overspray etc. gegeben ist, die Schichtdicken sind sehr gut reproduzierbar und die Entsorgung von Overspray entfällt.

Gegenstand der Erfindung ist das Verfahren zur Beschichtung von Siliconelastomeren, dadurch gekennzeichnet, daß das Beschichtungsmittel als Tropfen oder Flüssigkeitsstrahl mittels einer Dosierpumpe auf das Siliconelastomer appliziert und anschließend ausgehärtet wird.

Als Beschichtungsmittel sind dabei einsetzbar Ein- oder Zweikomponentenlacke auf organischer Basis.

Ebenfalls einsetzbar sind flüssige vernetzbare Siliconkautschukmischungen, die ein geeignetes verdampfbares Lösungsmittel und gegebenenfalls Ruß enthalten.

In einer Ausführungsform des Verfahrens wird als Beschichtungsmittel ein organischer Lack, vorzugsweise ein Polyurethanlack eingesetzt. In diesem Fall wird vorzugsweise unmittelbar vor der Applikation die Oberfläche des Silicons einer Corona-Behandlung oder einer Gasbeflammung nach bekannten Verfahren (vgl. arcotec, Deutschland "HF-corona Treatment a brief summary" und "Pre-treatment with the gas flame") dergestalt, daß eine hydrophile Oberfläche mit einer Oberflächenspannung >33 mN/m entsteht, unterzogen.

### Als Ein-Komponentenlacke seien beispielhaft genannt:

Lacke auf Basis von Alkyd-, Acrylat-, Epoxid-, Polyvinylacetat-, Polyester-, Polyvinylchlorid- oder Polyurethanharzen und

### als Zwei-Komponentenlacke seien:

Lacke auf Basis von (i) Hydroxylgruppen aufweisenden Polyacrylat-, Polyester-, Polyurethan-, Polyester/Polyacrylat-, Polyurethan/Polyacrylat- oder Polyester/Polyurethanharzen und (ii) Melaminharzen, Polyisocyanaten oder blockierten Polyisocyanaten als Vernetzer.

Als flüssige vernetzbare Siliconkautschukmischungen kann eine Mischung aus
a) mindestens einem vernetzbaren Organopolysiloxan
b) mindestens einem Vernetzungsmittel
c) gegebenenfalls Ruß und
d) gegebenenfalls einem Lösemittel mit einem Siedepunkt zwischen 160 und 250°C
eingesetzt werden.

Als vernetzbares Organopolysiloxan (a) können alle bisher in vernetzbaren Organopolysiloxanmassen eingesetzten Polysiloxane eingesetzt werden. Vorzugsweise handelt es sich bei (a) um ein Siloxan aus Einheiten der allgemeinen Formel (I)

(R¹)ₐ(R²)_{b}SiO_{(4-a-b)/2} (I),

in denen
- R¹: einen einwertigen aliphatischen Rest mit 1 bis 8 Kohlenstoffatomen und
- R²: einen Alkylenrest mit 2 bis 8 Kohlenstoffatomen bedeutet,
- a=: 0, 1, 2 oder 3,
- b=: 0, 1 oder 2
und die Summe a+b = 0, 1, 2 oder 3 ist,
mit der Maßgabe, daß durchschnittlich mindestens 2 Reste R² pro Molekül vorliegen. Vorzugsweise ist (a) dimethylvinylsiloxyendgestoppt.

In einer bevorzugten Ausführungsform der Erfindung weisen die erfindungsgemäßen Organosiloxane (a) Viskositäten von 0,01 bis 200 Pas, ganz besonders bevorzugt 0,2 bis 200 Pas auf.

Die Viskositäten werden gemäß DIN 53 019 bei 20°C bestimmt.

Herstellungsbedingt können insbesondere bei den verzweigten Polymeren, die auch in Lösungsmittel gelöste Festharze sein können, noch bis maximal 10 Mol-% aller Si-Atome, Alkoxy- oder OH-Gruppen aufweisen.

Als Vernetzungsmittel (b) im Sinne der Erfindung können vorzugsweise lineare, cyclische oder verzweigte Organopolysiloxane aus Einheiten der allgemeinen Formel (II)

(R¹)_{c}(H)_{d}SiO_{(4-c-d)/2} (II),

in denen
- R¹=: einwertiger aliphatischer Rest mit 1 bis 8 Kohlenstoffatomen,
- c=: 0,1, 2 oder 3,
- d=: 0,1 oder 2,
wobei die Summe c+d = 0,1, 2 oder 3 ist,
mit der Maßgabe, daß durchschnittlich mindestens 3 Si-gebundene Wasserstoffatome je Molekül vorliegen,
wie Kombination mit einem Platinkatalysator und gegebenenfalls einen Inhibitor, eingesetzt werden.

Die eingesetzten Hydrogensiloxane (b) besitzen vorzugsweise eine Viskosität von 0,01 bis 5 Pas.

In einer weiteren Ausführungsform der Erfindung wird als Vernetzungsmittel b) ein Peroxid, wie z.B. Aroyl- oder Dialkylperoxide, eingesetzt. Beispiele hierfür sind 2,4-Dichlorbenzoylperoxid, 4-Methylbenzoylperoxid, Dicumylperoxid und/oder 2,5-Bistert-butylperoxo-2,5-dimethylhexan.

Wenn Organopolysiloxane mit Si-gebundenen Wasserstoffatomen als Vernetzer eingesetzt werden, dann werden als Katalysatoren für die Vernetzungsreaktion vorzugsweise Pt(0)-Komplexe mit Alkenylsiloxanen als Liganden in katalytischen Mengen von 1 bis 100 ppm Pt eingesetzt. Pt(0)-Komplexe sind z.B. Pt-(0) mit den folgenden Liganden: 1,3-Divinyl-tetramethyldisiloxan oder 1,3,5,7-Tetravinyl-1,3,5,7-tetramethylcyclotetrasiloxan. Zur Einstellung der Topfzeit können alle gängigen Verbindungen, die bisher für diesen Zweck eingesetzt wurden, verwendet werden. Beispiele für solche bevorzugten Inhibitoren sind z.B. 1,3-Divinyl-tetramethyldisiloxan, 1,3,5,7-Tetravinyl-1,3,5,7-tetramethylcyclotetrasiloxan, 2-Methylbutinol (2) oder 1-Ethinylcyclohexanol in Mengen von 50 bis 10.000 ppm.

Das Verhältnis der SiH-Gruppen in der Komponente b) zu den Alkenylgruppen in der Komponente a) beträgt vorzugsweise 1,2 :1 bis 10:1.

Als Ruße (c) im Sinne der Erfindung wird vorzugsweise feinteilige Ruße mit einer BET-Oberfläche von 50 bis 1200 m²/g eingesetzt.

Als Lösungsmittel (d) können Verbindungen oder Gemische, die Siliconpolymere lösen und einen Siedepunkt bzw. Siedebereich zwischen 160 und 250°C aufweisen, eingesetzt werden. Bevorzugt sind lineare, oder cyclische Polydimethylsiloxane bzw. Gemische daraus. Besonders bevorzugt ist Decamethylcyclopentasiloxan.

Als weitere Bestandteile können die Mischungen auch verstärkende Füllstoffe, wie z.B. feinteilige Kieselsäuren, enthalten, die gegebenenfalls, nach gängigen Methoden, hydrophobiert eingesetzt werden.

Als Dosierpumpen sind dabei alle Mikropumpen einsetzbar, die lösungsmittelhaltige Mischungen in kleinen Mengen (ca. < 500 µl) dosieren können z.B. erhältlich bei der Firma Eppendorf, Deutschland. Die Dosierung erfolgt vorzugsweise über eine Verteilerkammer in der auch eine Düse eingearbeitet ist. Der Düsendurchmesser beträgt dabei vorzugsweise zwischen 0,1 bis 1 mm. Bevorzugt sind auch kontinuierlich elektronisch gesteuerte Pumpen, angetrieben durch einen Schrittmotor, wobei das Pumpenteil aus einer Büchse und einer unrunden Welle besteht.

In einer bevorzugten Ausführungsform des erfindungsgemäßen Verfahrens erfolgt die Applikation derart, daß das Düsenende der Dosierpumpe mit dem Siliconelastomer an das Substrat so herangeführt wird, daß vorzugsweise der Abstand zwischen Düsenende und Substrat bis maximal 20 mm, vorzugsweise <0,5 mm ist, und die Dosierung durch Stoppen des Stoffstroms und durch Wegziehen der Düsen beendet wird.

Die Viskosität der Gesamtmischung liegt dabei vorzugweise zwischen 0,05 und 10 Pas.

Das Aushärten kann dabei mittels Heißluftbehandlung oder auch IR-Bestrahlung erfolgen.

Die Heißluftbehandlung erfolgt je nach Dicke der Beschichtung vorzugsweise bei Temperaturen zwischen 60 und 200°C über einen Zeitraum von mindestens 1 Minute.

Für die IR-Bestrahlung wird vorzugsweise ein kurzwelliger IR-Strahler mit Goldreflektor mit mindestens 1000 Watt eingesetzt.

Die Erfindung wird anhand der folgenden Beispiele erläutert, ohne daß diese limitierend wirken.

### Ausführungsbeispiele

In den Beispielen wurde eine handelsübliche elektronisch gesteuerte kontinuierliche Dosierpumpe, für Mengen von 10 bis 500 µl eingesetzt. Diese förderte die Beschichtungsmasse in einem flexiblen Schlauch aus einem mit den Beschichtungsmassen verträglichen Material (z.B. Polytetrafluorethylen) mit ca. 2 mm Innendurchmesser und einem Außendurchmesser von 3 mm zu einem Verteiler. Dieser bestand aus gedrehten Aluminiumteilen. Stahl oder verträgliche Kunststoffe waren auch möglich.

Der Verteiler hatte einen Einlaß für o.g. Schlauch und entsprechend der Anzahl der gewünschten Beschichtungsflächen (z.B. Kontaktpunkte) 11 mm lange Auslaßröhrchen aus Stahl mit einem Außendurchmesser von 0,8 mm und einem Innendurchmesser von 0,5 mm. Diese waren aus handelsüblichen Spritzenkanülen gefertigt, indem sie am oberen Ende mit Cyanacrylatkleber in der Verteilerplatte eingeklebt wurden und anschließend mittels Drahterosion am unteren Ende sauber auf entsprechende Länge gebracht wurden. Ein präzises Ausbohren mit 0,5 mm dicken Stahlbohrern verhinderte evtl. Rohreinengungen durch eingelaufenen Cyanacrylatkleber. Die Verteilerkammer war plan und wies eine Höhe von 0,5 mm auf. Verteilerplatte und Verteilerkammer wurden durch einen O-Ring aus Fluorkautschuk abgedichtet und verschraubt.

Alternativ zu den Spritzenkanülen konnten auch handelsübliche Einweg Pipettenspitzen mit einer Öffnung von ca. 0,5 mm eingesetzt werden. Diese wurden auf entsprechende in der Verteilerplatte befindliche Aufsetzröhrchen gesteckt.

Der Verteiler wurde in eine vertikale Absenkvorrichtung gespannt, ähnlich einem Bohrständer für Handbohrgeräte, gegebenenfalls mit elektronisch gesteuertem Absenkmechanismus.

Das Substrat wurde exakt in einem Substrathalter positioniert, der Verteiler wurde bis auf einen Abstand von 0,5 mm von der Auslaßöffnung zum Substrat abgesenkt. Erst dann erfolgt eine Dosierung der Beschichtungsmasse. Die Auslaßöffnung konnte auch parallel zur Substratoberfläche gerührt werden, um bestimmte Beschichtungsgeometrien zu realisieren (z.B. ringförmige Beschichtungen oder etwas größere Flächen-z.B. 100 mm², um die Kapillareffekte bei diesen kleinen Beschichtungsflächen auszugleichen). Unmittelbar nach der Pumpenförderung wurde der Verteiler wieder angehoben. Das noch nasse Substrat wurde dann einem IR-Strahler oder einer Heißluftbehandlung zugeführt. Hier erfolgt die gleichzeitige Vernetzung der Beschichtungsmasse und gegebenenfalls das Abdampfen des Lösungsmittels.

### Beispiel 1 (erfindungsgemäß)

In einem Dissolver wurden 37,5 Teile dimethylvinylsiloxyendgestopptes Polydimethylsiloxan mit einer Viskosität von 10 Pas a), 51,9 Teile Decamethylcyclopentasiloxan (D5) (Siedepunkt = 210°C) d) mit 10,6 Teilen Ruß c) mit einer BET-Oberfläche von 990 m²/g in 20 Minuten verrührt und anschließend auf einem Dreiwalzenstuhl homogenisiert und anschließend mit 333 Teilen Decamethylcyclopentasiloxan (D5) d), 1,9 Teile eines linearen Polymethylsiloxans mit einem SiH-Gehalt von 4,3 mmol SiH/g und einer Viskosität von 40 mPas b), 0,016 Teile einer Platinkomplexverbindung mit Tetramethyltetravinylcyclotetrasiloxan als Liganden (Pt-Gehalt: 15 Gew.-%) und 0,056 Teile 1-Ethinylcyclohexanol b) vermischt.

Der so hergestellte flüssige Siliconkautschuk wurde mit 25 % D5 verdünnt (Viskosität nach Verdünnung 0,8 Pas (gemessen nach DIN 53 019 bei 20°C)) über eine elektronisch gesteuerte, kontinuierliche Dosierpumpe und über eine Verteilkammer mit Düsen (Durchmesser 0,5 mm) in einer Menge von ca. 5 µl/Düse = 90 µl für 17 Düsen mit einer Geschwindigkeit von 500 µl/s auf die Rückseite einer Schaltmatte auf die jeweiligen 17 Plätze für die Kontaktpunkte aufgetragen und anschließend durch 10 minütige Heißluftbehandlung bei 150°C vulkanisiert.

Die so erhaltene Schaltmatte besaß eine glatte Oberfläche und zeigte beim Aufdrücken auf einer Leiterplatte mit Kupferleitungen im Abstand von 0,4 mm einen mittleren Kontaktwiderstand von 13 Ω.

### Beispiel 2 (erfindungsgemäß)

Es wurden 5,9 Teile eines Trimerisats auf der Basis von Hexamethylendiisocyanat mit einem Isocyanatgehalt von 21,5 % sowie 52,1 Teile eines hydroxyfunktionellen Acrylatpolyols, 50 proz. in Methoxypropylacetat/Xylol, Hydroxylzahl (titrimetrisch): 33 mg KOH/g mit 42,0 Teilen Methoxypropylacetat homogen vermischt. die Lösung wurde in oben beschriebener Dosiereinrichtung mit einer Fördermenge von 390 µl auf 17 Tasten einer zuvor gasbeflammten Siliconelastomertastatur appliziert. Hierbei bestand die Gasbeflammung aus einem Bunsenbrenner mit einem Verbrauch an Propan - Butan von 1 g/min, die zu beschichtende Siliconschaltmatte wurde im Abstand von 20 mm von der Brenneröffnung innerhalb des blauen Flammkegels mit einer Geschwindigkeit von 200 mm/sec 30 mal an der Flamme hin und zurück vorbeigeführt. Hierbei wurde darauf geachtet, daß keine Verbrennungen an der zu beschichtenden Oberfläche stattfanden. Abschließend wurde die beschichtete Schaltmatte bei 90°C 20 min im Heißluftofen gehärtet. Man erhielt eine gut haftende und abriebfeste Schutzschicht.

## Patentansprüche

1. Verfahren zur Beschichtung von Siliconelastomeren, worin ein Beschichtungsmittel auf ein Siliconelastomer appliziert und anschließend gehärtet wird, **dadurch gekennzeichnet, daß** das Beschichtungsmittel mittels einer Dosierpumpe als Tropfen oder als Flüssigkeitsstrahl auf das Siliconelastomer appliziert wird.

2. Verfahren nach Anspruch 1, **dadurch gekennzeichnet, daß** als Beschichtungsmittel mindestens eine vernetzbare Siliconkautschukmischung die im wesentlichen besteht aus:
a) mindestens einem vernetzbaren Organosiloxan,
b) mindestens einem Vernetzungsmittel,
c) gegebenenfalls Ruß,
d) gegebenenfalls einem Lösungsmittel mit einem Siedepunkt zwischen 160 und 250 °C
eingesetzt wird.

3. Verfahren nach Anspruch 1, **dadurch gekennzeichnet, daß** als Beschichtungsmittel ein organischer Lack eingesetzt wird, wobei unmittelbar vor der Applikation die Oberfläche des Silicons einer Corona-Behandlung oder einer Gasbeflammung unterzogen wird.

## Claims

1. Process for coating silicone elastomers, in which a coating composition is applied to a silicone elastomer and is subsequently cured, **characterized in that** the coating composition is applied as droplets or as a liquid jet to the silicone elastomer by means of a metering pump.

2. Process according to Claim 1, **characterized in that** the coating composition used is at least one crosslinkable silicone rubber mixture which consists essentially of:
a) at least one crosslinkable organosiloxane,
b) at least one crosslinker,
c) if desired, carbon black,
d) if desired, a solvent having a boiling point in the range from 160 to 250°C.

3. Process according to Claim 1, **characterized in that** the coating composition used is an organic surface coating composition and the surface of the silicone is subjected to a corona treatment or treatment with gas flame immediately before the application.

## Revendications

1. Procédé de revêtement d'élastomères de silicone où un agent de revêtement est appliqué sur un élastomère de silicone puis durci, **caractérisé en ce que** l'agent de revêtement est appliqué sur l'élastomère de silicone au moyen d'une pompe doseuse sous forme de gouttes ou d'un jet de liquide.

2. Procédé selon la revendication 1 **caractérisé en ce que** l'on utilise comme agent de revêtement au moins un mélange de caoutchoucs de silicone réticulable qui consiste essentiellement en :
a) au moins un organosiloxane réticulable,
b) au moins un agent de réticulation,
c) éventuellement du noir de carbone,
d) éventuellement un solvant ayant un point d'ébullition situé entre 160 et 250°C.

3. Procédé selon la revendication 1 **caractérisé en ce que** l'on utilise comme agent de revêtement une peinture organique, la surface du silicone étant soumise immédiatement avant l'application à un traitement par décharge corona ou un traitement avec la flamme d'un gaz.
